# FASCICULE DE BREVET EUROPEEN

(11) **EP 2 245 544 B1**
(45) Date de publication et mention de la délivrance du brevet: **24.08.2011**
(21) Numéro de dépôt: 09707661.6
(22) Date de dépôt: 02.02.2009
(51) Int. Cl.: G06F 13/38

(54) **DISPOSITIF DE MÉMOIRE DE MASSE ET SYSTÈME DE STOCKAGE**
MASSENSPEICHEREINRICHTUNG UND SPEICHERSYSTEM
MASS STORAGE DEVICE AND STORAGE SYSTEM

(30) Priorité: 05.02.2008 FR 0800593
(43) Date de publication de la demande: 03.11.2010
(73) Titulaire: SAGEM Défense Sécurité, 75015 Paris (FR)
(72) Inventeur: COURTEILLE, Jean-Marie, F-75015 Paris (FR); GUILLOT, François, F-75015 Paris (FR)
(74) Mandataire: Maillet, Alain
(86) Numéro de dépôt international: PCT/EP2009/051156
(87) Numéro de publication internationale: WO 2009/098184

(56) Documents cités:
- US-A1- 2004 246 987
- US-A1- 2005 259 536

## Description

La présente invention concerne les dispositifs de mémoire de masse informatique et plus particulièrement leur architecture.

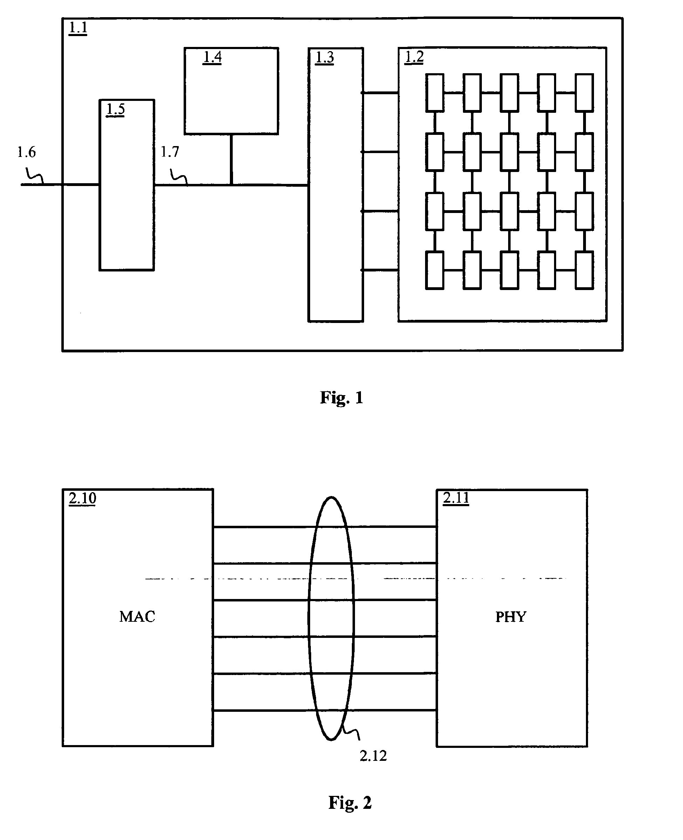

L'architecture interne d'un dispositif de mémoire de masse, tel qu'un disque sur composant mémoire SSD (*Solid State Drive* en anglais), est illustrée Fig. 1. Cette architecture est dérivée de l'architecture des disques durs dont elle reprend les principales caractéristiques. Le disque sur composant mémoire 1.1 est composé d'un module physique de mémoire de masse 1.2, en l'occurrence un banc de composants mémoire contenant les composants mémoire proprement dits. Ces composants mémoire sont généralement de la mémoire de type *Flash.* Un module de gestion physique 1.3 de la mémoire de masse permet la gestion des lectures et des écritures de données sur le module physique de mémoire 1.2. Ce module de gestion physique, par exemple constitué d'un composant programmable, est connecté à un module de contrôle 1.4 qui gère les commandes de haut niveau de gestion du dispositif de mémoire. Ces commandes comprennent des commandes d'accès direct à la mémoire DMA (*Direct Memory Access* en anglais), la gestion des modes de lecture écriture en rafale (*burst* en anglais) et autres. Ce module de contrôle comprend un processeur et de la mémoire permettant l'exécution d'un logiciel embarqué (*firmware* en anglais) de gestion du dispositif de mémoire. Les échanges entre le module de contrôle 1.4 et le module de gestion physique du banc de composants mémoire 1.3 se font à l'aide d'un bus de communication propriétaire 1.7. Le module de contrôle 1.4 est connecté par ce même bus 1.7 à un module d'adaptation de lien 1.5 permettant la gestion de l'interface 1.6 de communication du dispositif de mémoire de masse avec l'extérieur. Cette interface est aujourd'hui généralement conforme à la norme S-ATA (*Serial Advanced Technology Attachement* en anglais) l'évolution actuelle de la norme IDE (*Integrated Drive Electronics* en anglais). Ces normes, en définissant l'interface entre un ordinateur et un dispositif de mémoire de masse, permettent l'interopérabilité entre les différents fabricants de ces dispositifs de mémoire de masse. Le dispositif ici décrit est un dispositif à base de composants mémoire, mais tout autre module physique de mémoire de masse peut être utilisé, comme un disque dur magnétique ou autre.

Il est parfois avantageux de pouvoir déporter ces dispositifs de mémoire de masse à distance de l'appareil qui les gère. Cette déportation n'est pas possible en utilisant le lien IDE limité à une distance de 50 cm. Certains dispositifs de mémoire de masse intègrent un module de gestion de bus, tel que par exemple le bus série universel USB (*Universal Serial Bus* en anglais). Ces dispositifs de mémoire de masse permettent un branchement en externe à un système d'information, toutefois la distance maximum de déport reste limitée à une distance de l'ordre de cinq mètres.

Pour résoudre ce problème de déportation, il est connu de concevoir des dispositifs de mémoire de masse accessibles par réseau ou NAS (*Network Attached Storage* en anglais). Ces NAS sont conçus en adjoignant au disque, tel que décrit dans la Fig. 1, un système hôte comprenant une unité centrale, une interface S-ATA d'un côté et une interface réseau. L'unité centrale gère le disque de la même manière qu'un système d'information classique de type ordinateur et expose au réseau un système de fichiers pouvant être partagé selon les protocoles de partage de systèmes de fichiers classiques. Ces systèmes impliquent donc l'implémentation d'un hôte complexe permettant la gestion du dispositif de mémoire de masse. Cet hôte doit embarquer un système d'exploitation complexe devant gérer un ensemble complet de protocoles de communication réseau. Ils offrent, par contre, l'avantage d'un accès à distance arbitraire dès lors que le système accédant et le dispositif de mémoire de masse sont connectés par un réseau de communication. Avec le document US 2006259536, on connait déjà un dispositif de mémoire de masse comportant un module physique et un module de gestion physique de la mémoire disposant d'une connexion de lus pour communiquer avec le module de contrôle

La présente invention vise à proposer un dispositif de mémoire de masse pouvant être facilement déporté tout en restant de conception simple. Ce dispositif dispose d'un bus de la famille des bus MII (*Media Independent Interface* en anglais) connecté au composant programmable gérant les lectures écritures sur la mémoire. Cette architecture permet d'implémenter le module de contrôle du dispositif à distance, la communication entre le contrôleur et le composant programmable pouvant être déportée sur un lien Ethernet directement connecté au bus de la famille MII. Il est facile de décliner cette architecture pour la conception de dispositifs de mémoire de masse comprenant le module de contrôle, également de dispositifs où le dispositif de contrôle est déporté et encore de dispositifs de mémoire de masse de type NAS d'architecture simplifiée. Ces dispositifs ayant une architecture simple, ils offrent une sécurité améliorée dont la certification est plus aisée.

La présente invention concerne un dispositif de mémoire de masse comportant un module physique de mémoire de masse, un module de gestion physique de la mémoire contrôlé par un module de contrôle et où ledit module de gestion physique de la mémoire dispose d'une connexion à un bus de la famille MII pour communiquer avec ledit module de contrôle.

Avantageusement, le dispositif comporte en outre ledit module de contrôle intégré au dispositif et directement connecté au module de gestion physique de la mémoire via ledit bus de la famille MII.

Avantageusement, le dispositif comporte en outre un module d'adaptation de lien gérant une interface pour la communication avec un système hôte sous le contrôle du module de contrôle.

Avantageusement, le dispositif comporte en outre une prise de type Ethernet et un module de gestion physique Ethernet pour gérer la prise directement connectée au bus de la famille MII connecté au module de gestion physique de la mémoire.

L'invention concerne également un système de stockage comportant un système hôte comprenant une prise de type Ethernet, un module de gestion physique Ethernet gérant ladite prise, un module de contrôle comprenant un processeur et où le système comprend au moins un dispositif de mémoire de masse tel que ci-dessus connecté par un lien Ethernet à ladite prise Ethernet du système hôte et où ledit module de contrôle est connecté au module de gestion physique Ethernet du système hôte via un bus de la famille MII, lui permettant ainsi de contrôler le module de gestion physique de la mémoire du dispositif de mémoire de masse connecté au travers du lien Ethernet.

Avantageusement le module de contrôle de l'hôte d'une part et le module de gestion physique de la mémoire d'autre part possèdent des moyens de gérer un protocole de commandes transitant sur le lien Ethernet, transportés dans des paquets de données conformes à la norme Ethernet.

Avantageusement, le module de contrôle de l'hôte d'une part et le module de gestion physique de la mémoire d'autre part possèdent en outre des moyens de gérer ledit protocole de commandes dans des paquets de données UDP encapsulés dans des paquets de données IP transportés dans des paquets Ethernet, cette gestion du protocole IP permettant de faire transiter les commandes dudit protocole sur un réseau IP entre le système hôte et le dispositif de mémoire de masse.

Avantageusement, le système hôte comporte en outre au moins une seconde prise Ethernet permettant la connexion du système hôte à un réseau de communication et des moyens de gestion d'une pile de protocoles réseau complète par le module de contrôle du système hôte, permettant d'exposer le dispositif de mémoire de masse sur le réseau de communication, formant ainsi un dispositif de mémoire de masse accessible par réseau.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre un exemple d'architecture connue d'un dispositif de mémoire de masse.
La Fig. 2 illustre l'utilisation d'un bus de la famille MII au sein d'une interface Ethernet.
La Fig. 3 illustre l'architecture d'un dispositif de mémoire de masse selon un premier mode de réalisation de l'invention.
La Fig. 4 illustre l'architecture d'un dispositif de mémoire de masse selon un second mode de réalisation de l'invention.
La Fig. 5 illustre l'architecture d'un système utilisant le contrôle déporté d'un dispositif de mémoire de masse selon le second mode de réalisation de l'invention.
La Fig. 6 illustre un exemple de protocole utilisable entre le module de contrôle et le dispositif de mémoire de masse.
La Fig. 7 illustre un exemple d'architecture logique d'un module de gestion physique d'un module physique de mémoire selon l'invention.
La Fig. 8 illustre l'architecture d'un dispositif de mémoire de masse accessible par réseau utilisant un dispositif de mémoire de masse selon le second mode de réalisation de l'invention.

Le bus MII (*Media Independent Interface* en anglais) est standardisé par l'IEEE (*Institute of Electrical and Electronics Engineers* en anglais) sous la référence IEEE 802.3u. Ce bus est utilisé pour l'implémentation des liens selon la norme Ethernet définie par l'IEEE sous la référence 802.3. Ce bus a été développé pour gérer la communication entre un module Ethernet physique et un module Ethernet MAC (*Media Access Control* en anglais). Cette architecture est illustrée par la Fig. 2. Sur cette figure, un module de gestion Ethernet MAC 2.10 est connecté à un module de gestion physique 2.11 par un bus MII 2.12. Ce bus permet l'échange de mots de 4 bits dans les deux directions cadencé par une horloge de 25 MHz. Le module de gestion physique 2.11 permet de gérer l'envoi et la réception des signaux transportant les paquets de données Ethernet sur le média physique. Le module de gestion MAC 2.10 s'occupe de la gestion de ces paquets, de les composer. Il est piloté par les couches supérieures de la pile de protocoles réseau utilisée, typiquement par la couche IP (*Internet Protocol* en anglais décrit dans la RFC 791). Ce bus a évolué pour suivre les différentes versions du protocole Ethernet. On peut citer les normes RMII (*Reduced Media Independent Interface* en anglais), GMII (*Gigabit Media Independent Interface* en anglais), RGMII (*Reduced Gigabit Media Independent Interface* en anglais), XGMII (*10 Gigabit Media Independent Interface* en anglais) et SGMII (*Serial Gigabit Media Independent Interface* en anglais). Tous ces bus forment une famille, appelée ici famille des bus MII, cette famille étant appelée à s'étendre encore dans le futur.

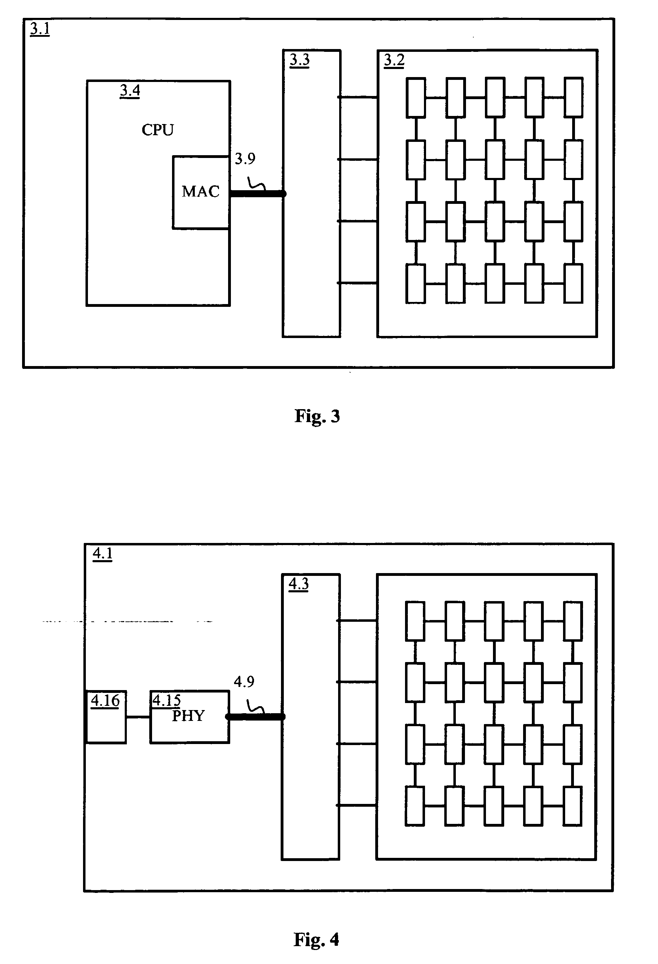

La présente invention prévoit l'utilisation d'un bus de la famille MII pour la communication entre le module de gestion physique gérant le module physique de mémoire et le module de contrôle. La Fig. 3 illustre l'architecture d'un dispositif de mémoire de masse 3.1 utilisant un tel bus. On retrouve le module physique de mémoire 3.2 géré par le module de gestion physique 3.3. Le dispositif de mémoire de masse 3.1 est sous le contrôle du module de contrôle 3.4. À la différence de l'art antérieur, la communication entre le module de contrôle 3.4 et le module de gestion physique 3.3 est faite à l'aide d'un bus 3.9 de la famille MII. Le module de contrôle 3.4 intègre alors un module Ethernet MAC connecté au bus de la famille MII. Cette architecture permet, entre autres, de fusionner sur un seul processeur, la fonctionnalité de module de contrôle et la fonctionnalité de processeur central de l'hôte utilisant le disque. De ce fait, le disque peut être directement connecté au processeur central via le bus de la famille MII. Il va être également possible de ce fait de concevoir aisément toute une famille de dispositifs de mémoire de masse sur la base de cette architecture.

Du fait de la connexion naturelle des bus de la famille MII avec un composant physique Ethernet, il va être possible d'introduire un lien Ethernet entre le module de contrôle 3.4 et le module de gestion physique 3.3. Ce lien Ethernet va permettre de déporter la partie physique du dispositif de mémoire de masse sur une distance de l'ordre d'une centaine de mètres. La Fig. 4 illustre un dispositif de mémoire de masse 4.1 pouvant être utilisé ainsi. Dans ce mode de réalisation de l'invention, le module de gestion physique 4.3 est connecté au bus de la famille MII 4.9. Ce bus est directement connecté à un module physique Ethernet 4.15 gérant directement une prise Ethernet 4.16. Avantageusement, on utilise la version GMII du bus de la famille MII et des liens Ethernet Gigabit. On obtient ainsi des débits élevés.

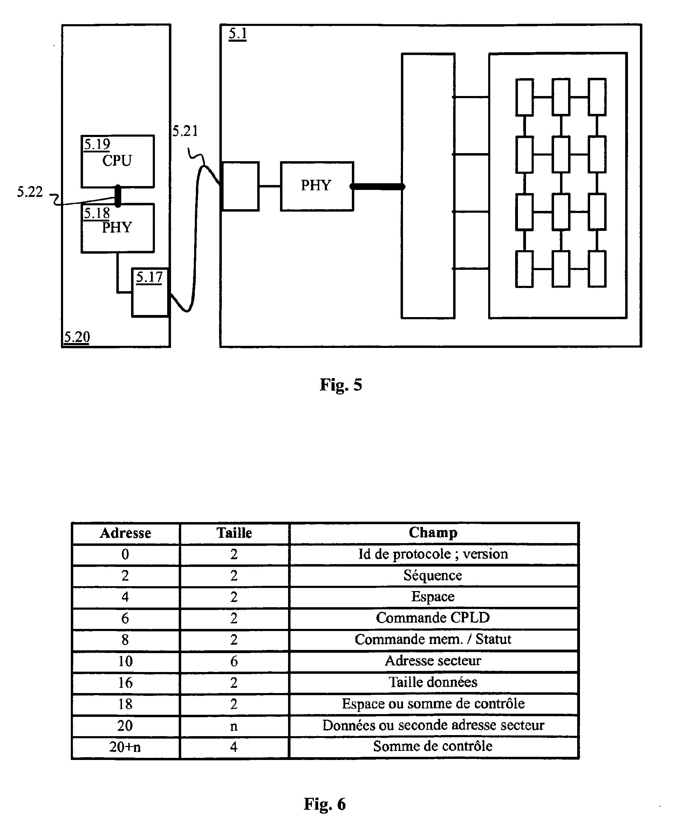

Ce mode de réalisation permet la conception d'un système de stockage tel que celui illustré Fig. 5. Dans ce système de stockage, un dispositif de mémoire de masse 5.1, similaire à celui de la Fig. 4, est connecté via un lien Ethernet 5.21 branché sur la prise Ethernet à un système hôte distant 5.20. Ce système hôte distant comporte également une prise Ethernet 5.17 gérée par un module physique Ethernet 5.18 connecté à un module de contrôle 5.19 disposant d'un processeur et d'un module Ethernet MAC permettant la gestion de la connexion au bus de la famille MII 5.22 pour la communication avec le module Ethernet physique 5.18. La communication à travers un lien Ethernet pouvant s'étendre jusqu'à une centaine de mètres, il est ainsi possible de déporter le module physique de mémoire à cette distance de l'hôte contenant le contrôleur. L'utilisation de dispositifs de routage Ethernet ou de fibre optique permet d'augmenter à volonté la distance entre l'hôte effectuant le contrôle et le dispositif de mémoire de masse. On peut également augmenter les capacités de stockage à volonté en connectant au réseau Ethernet le nombre nécessaire de tels dispositifs de mémoire de masse. Tous ces dispositifs peuvent être contrôlés par un même hôte comprenant le module de contrôle.

La possibilité de transporter une puissance utile de courant sur un lien Ethernet, par exemple selon la norme IEEE 802.3af, permet de concevoir sur ce modèle des dispositifs simplifiés autoalimentés. Ces dispositifs peuvent avoir une petite taille et offrir les mêmes avantages que les dispositifs de mémoire sur bus USB connus sous le nom de clés USB. A la différence que les dispositifs selon l'invention peuvent être connectés à distance de leur hôte de contrôle sur un réseau Ethernet.

Avantageusement, la communication entre le module de contrôle et le module de gestion physique se fait en utilisant le protocole Ethernet. En effet, l'utilisation de ce protocole pour l'échange de commandes et de données entre ces deux modules permet d'offrir une grande souplesse dans l'implémentation du module de contrôle. On peut ainsi imaginer un module de contrôle implémenté de façon logicielle sur un système d'information classique, par exemple de type PC (*Personnal Computer* en anglais). En effet, tout système à même de communiquer sur Ethernet peut implémenter le contrôle du dispositif de mémoire de masse. De même, du fait de l'utilisation du protocole Ethernet et de ses facultés d'adressage, il est possible de connecter une pluralité de dispositifs de mémoire de masse selon l'invention à un même réseau Ethernet. Ces dispositifs peuvent être gérés par un même module de contrôle, ce module de contrôle devant gérer les différentes adresses Ethernet des différents dispositifs pour leur adresser les commandes qui leur sont destinées.

De manière optionnelle, ces commandes peuvent également être transportées en utilisant le protocole UDP (*User Datagram Protocol* défini par la RFC 768) encapsulé dans le protocole IP et transporté sur Ethernet. Ce mode de réalisation ajoute les entêtes de ces protocoles respectifs aux commandes transportées, ce qui peut jouer négativement sur l'utilisation de la bande passante du lien entre le module de contrôle et le dispositif de mémoire. L'avantage de ce mode de réalisation est que l'on gagne en liberté d'implantation. En effet, le protocole IP étant routable sur un réseau complexe composé de réseaux hétérogènes interconnectés comme le réseau Internet, il devient possible d'augmenter la distance entre le module de contrôle et le dispositif de mémoire de masse de manière arbitraire. Il suffit que le module de contrôle et le dispositif de mémoire de masse soient connectés à un même réseau de communication au sens IP.

La Fig. 6 illustre un exemple de protocole de communication entre le module de contrôle et le module de gestion physique de la mémoire de masse. Ce protocole repose sur l'émission et la réception de paquets de données. Ces paquets possèdent un premier champ à l'adresse 0x0 d'une taille de deux octets contenant un identificateur du protocole utilisé et un numéro de version de ce protocole. Un second champ à l'adresse 0x2 d'une taille de deux octets contient un numéro de séquence permettant de détecter des duplications ou des pertes de paquets. Un troisième champ à l'adresse 0x4 d'une taille de deux octets contient un espace réservé. Un quatrième champ à l'adresse 0x6 d'une taille de deux octets contient une commande pour le module de gestion physique du module physique de mémoire. Un cinquième champ à l'adresse 0x8 d'une taille de deux octets contient une commande mémoire, c'est-à-dire un mot de commande destiné aux composants de mémoire dans le sens contrôle vers mémoire et un statut dans le sens mémoire vers contrôle. Un sixième champ à l'adresse 0x10 d'une taille de 6 octets contient une adresse de secteur. Un septième champ à l'adresse 0x16 d'une taille de deux octets contient la taille « n » des données en octets. Un huitième champ à l'adresse 0x18 d'une taille de deux octets contient un espace réservé ou une somme de contrôle pouvant contrôler l'intégrité de l'entête ou encore des données. Un neuvième champ à l'adresse 0x20 d'une taille variable de « n » octets indiquée dans le septième champ contient les données éventuelles liées à la commande. Un dixième champ à l'adresse 0x20 + *n* d'une taille de quatre octets contient une somme de contrôle du paquet permettant de détecter son intégrité. Il est évident que ce protocole n'est qu'un exemple et que l'on peut définir à ce niveau tout protocole permettant de piloter le module de gestion physique de la mémoire. Ce protocole doit permettre de transmettre des commandes de lecture, d'écriture et de gestion du module physique de mémoire telles qu'elles sont définies par le module de gestion physique de cette mémoire. Ce protocole est bidirectionnel et permet d'émettre des commandes à destination du module de gestion physique comme il permet au module de gestion physique de transmettre ses réponses, par exemple des données lues.

Les paquets de ce protocole de commande sont transportés dans des paquets Ethernet dans la partie donnée (*payload* en anglais) du paquet. Le module de contrôle implémente donc les fonctions de haut niveau de gestion du dispositif de mémoire de masse en décomposant chaque fonction de haut niveau en une pluralité de commandes de gestion physique qui sont alors émises à destination du module de gestion physique via l'émission de paquets Ethernet.

Comme nous l'avons vu plus haut, si l'on souhaite que ces paquets soient routables au niveau IP, il est possible de transporter ces paquets au sein de paquets UDP, eux-mêmes transportés dans des paquets IP. Les commandes entre le module de contrôle et le module de gestion physique peuvent alors être transmises par un réseau IP complexe et hétérogène tel que le réseau Internet.

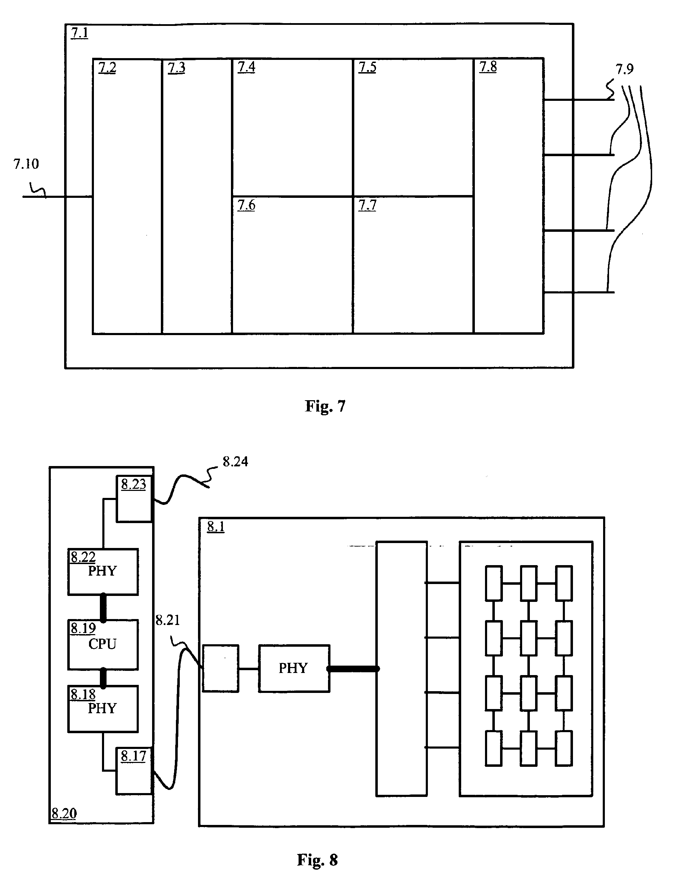

Pour pouvoir remplir son rôle dans une telle architecture, le module de gestion physique 7.1 de la mémoire peut, par exemple, posséder l'architecture fonctionnelle illustrée par la Fig. 7. Un module 7.2 d'adaptation au bus de la famille MII 7.10 permet la connexion du bus. Ce module est également chargé de l'interprétation et de l'encapsulation des paquets Ethernet et optionnellement des paquets UDP/IP. Le module 7.3 gère les files d'attente de paquets reçus et à envoyer. Ces files d'attente sont du type FIFO (*First In First Out* en anglais), c'est-à-dire premier entré premier sorti. Le module 7.4 est un module d'analyse des commandes reçues. Ces commandes comprennent les commandes de lecture, d'écriture, d'effacement, d'initialisation, etc. Le module 7.5 est le module d'exécution des commandes. Il effectue le pilotage des composants de mémoire du banc conformément aux commandes. Le module 7.8 est un module d'adaptation aux composants effectivement utilisé dans le module physique de mémoire. C'est un module de portabilité. Si l'on fait évoluer le type de composant, il suffit normalement de modifier ce module pour adapter le module de gestion physique. Les liens 7.9 sont les liens connectant le module de gestion physique aux composants du banc. Le module 7.6 est un module de vérification à la volée de la validité des données écrites ou lues dans les mémoires. Les erreurs, corrigibles ou non, sont reportées dans un registre d'état pouvant être retourné dans chaque paquet, le statut de la Fig. 6. Le module 7.5 est un module assurant l'intégrité des données dans la mémoire. C'est le module assurant l'atomicité des opérations d'écriture. Il gère les coupures et reprises d'alimentation. Par exemple, lors d'un déplacement de bloc de données, il s'assure que le bloc est correctement écrit avant d'autoriser l'effacement du bloc source.

Sur la base de ce dispositif de mémoire de masse, on peut concevoir aisément des dispositifs de mémoire de masse accessibles par réseau ou NAS. Un exemple d'un tel NAS est illustré Fig. 8. Le NAS est basé sur un dispositif de mémoire 8.1 du même type que celui de la Fig. 4. Ce dispositif est connecté par un lien Ethernet 8.21 à un hôte 8.20 qui en assure le contrôle. Cet hôte contient la prise Ethernet 8.17 permettant la connexion au dispositif 8.1. Cette prise est gérée par un module de gestion physique Ethernet 8.18. Le contrôle est effectué par le processeur 8.19 connecté au module de gestion physique Ethernet par un bus de la famille MII. Ce processeur prend donc en charge le contrôle du dispositif de mémoire de masse 8.1. Le processeur 8.19 de l'hôte 8.20 est également connecté par un autre bus de la famille MII à un autre module de gestion physique Ethernet 8.22 gérant une nouvelle prise Ethernet 8.23. Cette nouvelle prise permet de connecter l'hôte à un réseau de communication par un lien 8.24. Simplement en portant sur le processeur 8.19 une pile de protocoles réseau et les protocoles permettant d'exposer le dispositif de mémoire sur le réseau, on obtient ainsi un NAS équivalent fonctionnellement aux NAS traditionnels. Mais cette architecture est plus simple du fait qu'elle ne comprend qu'un processeur, le processeur de l'hôte. Le processeur principal du NAS effectue également la fonction de contrôle sans nécessiter un processeur dédié à ce contrôle au sein de la mémoire de masse. On obtient donc un NAS dont le prix de revient est inférieur à celui d'un NAS classique. D'autre part, la certification du NAS au point de vue de la sécurité s'en trouve facilitée.

On constate donc que l'architecture d'un dispositif de mémoire de masse basée sur l'utilisation d'un bus de la famille MII comme lien de communication avec le module de gestion physique de la mémoire permet la conception d'un ensemble de dispositifs simples et efficaces. Il devient aisé de déporter ces dispositifs à de grandes distances de leur module de contrôle. Il est également facile de faire évoluer la capacité en ajoutant de tels dispositifs sous le contrôle d'un même contrôleur sur un réseau Ethernet, voire même un réseau IP dans certains modes de réalisation. On peut, par exemple, utiliser de tels dispositifs pour répartir des mémoires enregistrant les paramètres de vol à différents endroits d'un avion, augmentant d'autant les chances de récupérer ces informations suite à un accident. Du fait de la grande simplicité de conception du dispositif de mémoire de masse, sa certification du point de vue de la sécurité est facilitée.

## Revendications

1. Dispositif de mémoire de masse (3.1, 4.1) comportant :
- un module physique de mémoire de masse (3.2, 4.2) ;
- un module de gestion physique de la mémoire (3.3, 4.3) contrôlé par un module de contrôle (3.4) ;
**caractérisé en ce que** ledit module de gestion physique de la mémoire (3.3, 4.3) dispose d'une connexion à un bus de la famille MII (3.9, 4.9) pour communiquer avec ledit module de contrôle (3.4).

2. Dispositif selon la revendication 1, **caractérisé en ce qu'**il comporte en outre :
- ledit module de contrôle (3.4) intégré au dispositif et directement connecté au module de gestion physique de la mémoire (3.3) via ledit bus de la famille MII (3.9).

3. Dispositif selon la revendication 2, **caractérisé en ce qu'**il comporte en outre un module d'adaptation de lien gérant une interface pour la communication avec un système hôte sous le contrôle du module de contrôle (3.4).

4. Dispositif selon la revendication 1, **caractérisé en ce qu'**il comporte en outre :
- une prise de type Ethernet (4.16) ;
- un module de gestion physique Ethernet (4.15) pour gérer la prise directement connectée au bus de la famille MII (4.9) connecté au module de gestion physique de la mémoire (4.3).

5. Système de stockage (Fig. 5) comportant un système hôte (5.20) comprenant :
- une prise de type Ethernet (5.17) ;
- un module de gestion physique Ethernet (5.18) gérant ladite prise ;
- un module de contrôle comprenant un processeur (5.19) ;
**caractérisé en ce que** :
- le système comprend au moins un dispositif de mémoire de masse selon la revendication 4 connecté par un lien Ethernet (5.21) à ladite prise Ethernet (5.17) du système hôte (5.20) ;
- ledit module de contrôle est connecté au module de gestion physique Ethernet (5.18) du système hôte via un bus de la famille MII, lui permettant ainsi de contrôler le module de gestion physique de la mémoire du dispositif de mémoire de masse connecté au travers du lien Ethernet (5.21).

6. Système de stockage selon la revendication 5, **caractérisé en ce que** le module de contrôle de l'hôte d'une part et le module de gestion physique de la mémoire d'autre part possèdent des moyens de gérer un protocole de commandes transitant sur le lien Ethernet transportés dans des paquets de données conformes à la norme Ethernet.

7. Système de stockage selon la revendication 6, **caractérisé en ce que** le module de contrôle de l'hôte d'une part et le module de gestion physique de la mémoire d'autre part possèdent en outre des moyens de gérer ledit protocole de commandes dans des paquets de données UDP encapsulés dans des paquets de données IP transportés dans des paquets Ethernet, cette gestion du protocole IP permettant de faire transiter les commandes dudit protocole sur un réseau IP entre le système hôte et le dispositif de mémoire de masse.

8. Système de stockage selon l'une des revendications 5 à 7, **caractérisé en ce que** le système hôte comporte en outre :
- au moins une seconde prise Ethernet permettant la connexion du système hôte à un réseau de communication ;
- des moyens de gestion d'une pile de protocoles réseau complète par le module de contrôle du système hôte, permettant d'exposer le dispositif de mémoire de masse sur le réseau de communication, formant ainsi un dispositif de mémoire de masse accessible par réseau.

## Claims

1. Mass memory device (3.1, 4.1) comprising:
- a physical mass memory module (3.2, 4.2);
- a module for physical management of the memory (3.3, 4.3) controlled by a control module (3.4);
**characterised in that** said physical management module for the memory (3.3, 4.3) has a connection to an MII-family bus (3.9, 4.9) for communicating with the said control module (3.4).

2. Device according to claim 1, **characterised in that** it also comprises:
- the said control module (3.4) integrated in the device and directly connected to the physical management module for the memory (3.3) via the said MII-family bus (3.9).

3. Device according to claim 2, **characterised in that** it also comprises a link adaptation module managing an interface for communication with a host system under the control of the control module (3.4).

4. Device according to claim 1, **characterised in that** it also comprises:
- a socket of the Ethernet type (4.16);
- a Ethernet physical management module (4.15) for managing the socket directly connected to the MII-family bus (4.9) connected to the physical management module for the memory (4.3).

5. Storage system (figure 5) comprising a host system (5.20) comprising:
- a socket of the Ethernet type (5.17);
- an Ethernet physical management module (5.18) managing the said socket;
- a control module comprising a processor (5.19); **characterised in that**:
- the system comprises at least one mass memory device according to claim 4 connected by an Ethernet link (5.21) to the said Ethernet socket (5.17) of the host system (5.20);
- the said control module is connected to the Ethernet physical management module (5.18) of the host system via an MII-family bus, enabling it thus to control the physical management module for the memory of the mass memory device connected through the internet link (5.21).

6. Storage system according to claim 5, **characterised in that** the control module for the host on the one hand and the physical management module for the memory on the other hand have means of managing a command protocol passing over the Ethernet link transported in data packets in accordance with the Ethernet standard.

7. Storage system according to claim 6, **characterised in that** the control module for the host on the one hand and the physical management module for the memory on the other hand also have means of managing the said command protocol in UDP data packets encapsulated in IP data packets transported in Ethernet packets, this management of the IP protocol making it possible to pass the commands of the said protocol over an IP network between the host system and the mass memory device.

8. Storage system according to one of claims 5 to 7, **characterised in that** the host system also comprises:
- at least a second Ethernet socket enabling the host system to be connected to a communication network;
- means of managing a complete stack of network protocols by the control module for the host system, making it possible to expose the mass memory device on the communication network, thus forming a mass memory device accessible by network.

## Patentansprüche

1. Massenspeichervorrichtung (3.1, 4.1), umfassend:
- ein physisches Massenspeichermodul (3.2, 4.2);
- ein physisches Speicherverwaltungsmodul (3.3, 4.3), das von einem Steuerungsmodul (3.4) gesteuert wird,
**dadurch gekennzeichnet, dass** das physische Speicherverwaltungsmodul (3.3, 4.3) über eine Verbindung mit einem Bus aus der Familie MII (3.9, 4.9) verfügt, um mit dem Steuerungsmodul (3.4) zu kommunizieren.

2. Vorrichtung nach Anspruch 1, **dadurch gekennzeichnet, dass** sie des Weiteren umfasst:
- das in die Vorrichtung integrierte und direkt mit dem physischen Speicherverwaltungsmodul (3.3) über den Bus aus der Familie MII (3.9) verbundene Steuerungsmodul (3.4).

3. Vorrichtung nach Anspruch 2, **dadurch gekennzeichnet, dass** sie des Weiteren ein Modul zur Verbindungsanpassung umfasst, das eine Schnittstelle für die Kommunikation mit einem Host-System unter der Steuerung des Steuerungsmoduls (3.4) verwaltet.

4. Vorrichtung nach Anspruch 1, **dadurch gekennzeichnet, dass** sie des Weiteren umfasst:
- einen Anschluss des Typs Ethernet (4.16):
- ein physisches Ethernet-Verwaltungsmodul (4.15), um den Anschluss zu verwalten, der direkt mit dem Bus aus der Familie MII (4.) verbunden ist, der an das physische Speicherverwaltungsmodul (4.3) angeschlossen ist.

5. Speichersystem (Fig. 5) mit einem Host-System (5.20), umfassend:
- einen Anschluss des Typs Ethernet (5.17);
- ein physisches Ethernet-Verwaltungsmodul (5.18), das den Anschluss verwaltet;
- ein Steuerungsmodul, das einen Prozessor (5.19) umfasst;
**dadurch gekennzeichnet, dass**
- das System wenigstens eine Massenspeichervorrichtung nach Anspruch 4 umfasst, die über eine Ethernet-Verbindung (5.21) mit dem Ethernet- Anschluss (5.17) des Host-Systems (5.20) verbunden ist;
- das Steuerungsmodul mit dem physischen Ethernet-Verwaltungsmodul (5.18) des Host-Systems über einen Bus aus der Familie MII verbunden ist, was ihm somit erlaubt, das physische Speicherverwaltungsmodul der Massenspeichervorrichtung zu steuern, die über die Ethernet-Verbindung (5.21) angeschlossen ist.

6. Speichersystem nach Anspruch 5, **dadurch gekennzeichnet, dass** das Steuerungsmodul des Hosts einerseits und das physische Speicherverwaltungsmodul andererseits Mittel zum Verwalten eines über die Ethernet-Verbindung laufenden Protokolls von Befehlen besitzen, die in der Ethernet-Norm entsprechenden Datenpaketen transportiert werden.

7. Speichersystem nach Anspruch 6, **dadurch gekennzeichnet, dass** das Steuerungsmodul des Hosts einerseits und das physische Speicherverwaltungsmodul andererseits des Weiteren Mittel besitzen, um das Befehlsprotokoll in UDP-Datenpaketen zu verwalten, die in IP-Datenpaketen eingekapselt sind, die in Ethernet-Paketen transportiert werden, wobei die Verwaltung des IP-Protokolls es ermöglicht, die Befehle des Protokolls auf einem IP-Netz zwischen dem Host-System und der Massenspeichervorrichtung zu übertragen.

8. Speichersystem nach einem der Ansprüche 5 bis 7, **dadurch gekennzeichnet, dass** das Host-System des Weiteren umfasst:
- mindestens einen zweiten Ethernet-Anschluss, der den Anschluss des Host-Systems an ein Kommunikationsnetz gestattet;
- Mittel zur Verwaltung eines vollständigen Netzprotokollstapels durch das Steuerungsmodul des Host-Systems, wodurch die Massenspeichervorrichtung für das Kommunikationsnetz geöffnet wird und somit eine Massenspeichervorrichtung bildet, auf die über das Netz zugegriffen werden kann.
